# EUROPÄISCHE PATENTSCHRIFT

(11) **EP 1 456 620 B1**
(45) Veröffentlichungstag und Bekanntmachung des Hinweises auf die Patenterteilung: **12.01.2011**
(21) Anmeldenummer: 02804862.7
(22) Anmeldetag: 14.11.2002
(51) Int. Cl.: G01M 3/20

(54) **GASDURCHLASS MIT SELEKTIV WIRKENDEN GASDURCHTRITTSFLÄCHEN**
GAS TRANSMITTER WITH SELECTIVE GAS PERMEABLE SURFACES
SYSTEME DE PASSAGE DE GAZ COMPRENANT DES SURFACES DE PASSAGE DE GAZ AGISSANT DE FA ON SELECTIVE

(30) Priorität: 18.12.2001 DE 10162126
(43) Veröffentlichungstag der Anmeldung: 15.09.2004
(73) Patentinhaber: Inficon GmbH, 50968 Köln (DE)
(72) Erfinder: WETZIG, Daniel, 50999 Köln (DE)
(74) Vertreter: Selting, Günther
(86) Internationale Anmeldenummer: PCT/EP2002/012718
(87) Internationale Veröffentlichungsnummer: WO 2003/052371

(56) Entgegenhaltungen:
- WO-A-96/41677

## Beschreibung

Die Erfindung bezieht sich auf einen Gasdurchlass mit selektiv wirkenden Gasdurchtrittsflächen mit den Merkmalen des Oberbegriffs des Patentanspruchs 1.

Ein Gasdurchlass dieser Art wird bei Mess- oder Analysegeräten eingesetzt. Es soll beispielsweise erreicht werden, dass leichte Gase bevorzugt, schwerere Gase weniger bevorzugt in ein Mess- oder Analysegerät eintreten. Es ist bekannt, dass die Durchlässigkeit der Membran für leichte Gase temperaturabhängig ist. Um davon - z. B. zur Steuerung der Durchlässigkeit - Gebrauch zu machen, muss die Membran mit einer Heizung ausgerüstet sein.

Aus der WO 96/41 677 ist ein Gasdurchlass der hier betroffenen Art bekannt. Um die Gasdurchtrittsflächen zu beheizen, ist jede der Vielzahl der Durchtrittsflächen mit einer Heizwendel ausgerüstet. Die Aufbringung der Heizwendeln erfolgt mittels dünnschichttechnischer Verfahren (z. B. Vakuumbeschichtungs- oder Aufdampfverfahren, Fotolithographie, Ätzen). Darüber hinaus müssen die Heizwendeln elektrisch kontaktiert werden, damit sie in einen Stromkreis einschaltbar sind. Auch die zu jeder der Heizwendeln führenden Stromleitungen müssen durch die genannten Beschichtungsverfahren auf die Membran aufgebracht werden. Insgesamt ist die Ausrüstung der Gasdurchlässe mit Heizmitteln nach dem Stand der Technik überaus aufwendig. Schließlich haben die Heizwendeln den Nachteil, dass sie relativ große Bereiche der aktiven Gasdurchtrittsflächen bedecken.

Der vorliegenden Erfindung liegt die Aufgabe zu Grunde, einen Gasdurchlass der hier betroffenen Art in Bezug auf seine Ausrüstung mit Mitteln zur Temperierung seiner Gasdurchtrittsflächen wesentlich einfacher zu gestalten.

Erfindungsgemäß wird diese Aufgabe dadurch gelöst, dass die Trägerscheibe selbst als Mittel zur Temperierung der Membran dient. Durch die Erfindung wird es möglich, auf die zusätzlichen Fertigungsschritte, die beim Stand der Technik für die Ausrüstung der Gasdurchlässe mit Temperiermitteln erforderlich sind, zu verzichten. Außerdem sind die Durchtrittsflächen frei von den Durchlass der Gase beeinträchtigenden Heizwendeln.

Als Trägerscheibe dient zweckmäßig ein handelsüblicher Siliziumwafer. Trägerscheiben aus anderen Materialien, die die Eigenschaften eines Halbleiters haben (z.B. Germanium, Diamant usw,) können ebenfalls eingesetzt werden.

Die Membran besteht zweckmäßig aus Quarz, Quarzglas oder ähnlichen Materialien, z.B. Pyrex-Glas. Einsetzbar sind aber auch Membranen mit selektiv wirkenden Eigenschaften aus einem Polymer, z.B. FEP, wie es aus der DE-A-43 26 267 bekannt ist.

Weitere Vorteile und Einzelheiten der Erfindung sollen an Hand von in den Figuren 1 bis 4 dargestellten Ausführungsbeispielen erläutert werden. Es zeigen
- Figuren 1a, 1b einen Gasdurchlass nach der Erfindung
- Figuren 2 und 3 schematisch dargestellte Geräte mit jeweils einem Gasdurchlass nach der Erfindung.

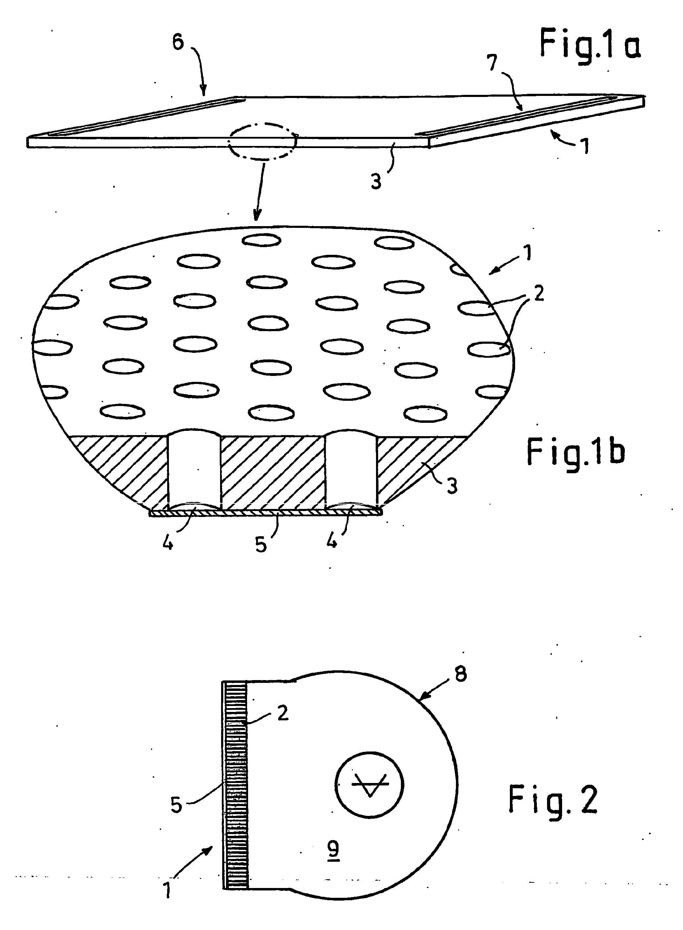

In den Figuren sind der Gasdurchlass mit 1, die mit einer Vielzahl von Durchtrittsöffnungen 2 (Figur 1b) ausgerüstete Trägerscheibe mit 3 und die die Durchtrittsöffnungen in der Trägerscheibe 2 abdeckende, die Durchtrittsflächen 4 bildende Membran mit 5 (Figur 1b) bezeichnet.

Bestandteil der Figur 1 a ist eine Teilvergrößerung des Gasdurchlasses 1, teilweise im Schnitt, teilweise in Ansicht. Nur diese Darstellung lässt die vorzugsweise durch Ätzen hergestellten Durchtrittsöffnungen 2, die Membran 5 sowie zwei der Gasdurchtrittsflächen 4 erkennen. Die Dicke der Trägerscheibe 3 liegt in der Größenordnung von 0,6 mm; die Dicke der Membran 5 beträgt etwa 6 µm.

Nach der erfindungsgemäßen Idee wird die Trägerscheibe 3 selbst als Widerstandsheizung eingesetzt. Sie ist dazu im Bereich gegenüberliegender Seiten mit metallischen Elektroden 6, 7 ausgerüstet, die zweckmäßig aufgedampft werden. An diese Elektroden wird die zur Erzeugung des Heizstromes erforderliche Spannung angelegt. Elektroden dieser Art sind nicht unbedingt erforderlich; bei einfacheren Lösungen können auch Kontaktklemmen eingesetzt werden.

Bei Raumtemperatur beträgt der Leitungswiderstand von Standard-Siliziumscheiben etwa 20 MOhm*cm. Mit einer Spannung von 1 kV wird in einer Scheibe mit den Maßen 1 cm x 1 cm x 625 µm ein Heizstrom von etwa 3 µA erzeugt, was einer elektrischen Heizleistung von 3 mW entspricht. Mit dieser Leistung wird der Wafer geringfügig erwärmt, so dass der Leitungswiderstand des Halbleitermaterials abnimmt und somit der Heizstrom bzw. die Heizleistung bei gleicher Spannung steigt. Bei einer Temperatur von T = 330°C beträgt der Leitungswiderstand etwa 3,8 Ohm*cm. Der Leitungswiderstand nimmt also um sieben zehnerpotenzen bei der Temperaturerhöhung um 360°C ab. Dadurch besteht die Möglichkeit, die Temperatur präzise über den elektrischen Strom regeln zu können.

Als Beispiel für ein Gerät, bei dem der erfindungsgemäße Gasdurchlass 1 eingesetzt wird, ist in Figur 2 ein Leckgasdetektor 8 dargestellt. Ein Leckgasdetektor dieser Art ist aus der DE-A-43 26 265 an sich bekannt. Durch den Gasdurchlass 1 eintretendes Leckgas, z.B. Helium, wird im sich hinter dem Gasdurchlass 1 -befindlichen abgeschlossenen Raum 9 über den Druckanstieg nachgewiesen. Die Trägerscheibe 2 dient erfindungsgemäß als Widerstandsheizung für die Membran 5, deren Durchläs-sigkeit für leichte Gase mit steigender Temperatur zunimmt. Nach der Bildung eines Signals kann die Heizung z.B. abgeschaltet werden, um zu vermeiden, dass unnötig viel Helium in das Detektorsystem gelangt. Praktisch handelt es sich bei dem dargestellten Detektor 8 um ein Druckmessgerät, was durch das dargestellte Symbol zum Ausdruck kommt.

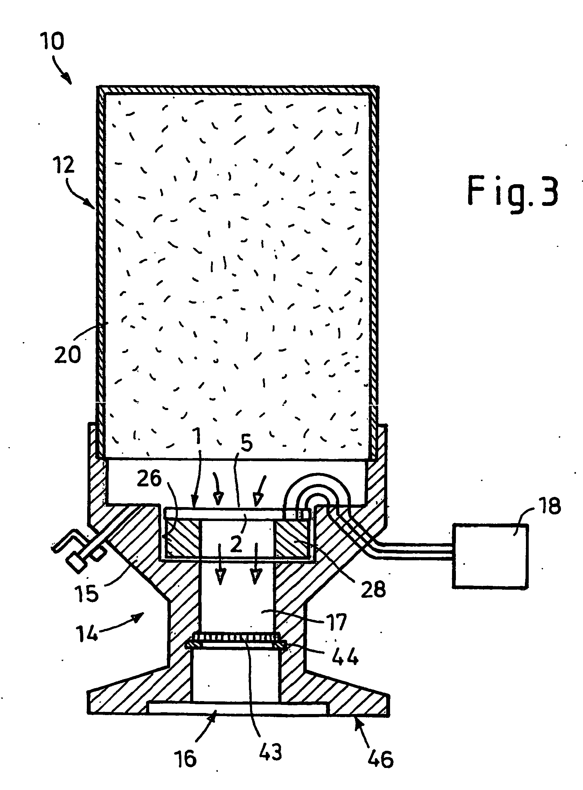

Figur 3 zeigt ein regelbares Testleck 10 mit einem Aufbau wie er bereits in der deutschen Patentanmeldung 101 22 733.7 beschrieben wurde. Es besteht im Wesentlichen aus einem Testgasspeicher 12, einem Sockel 14 mit einem Testgasauslass 16 und einer Steuervorrichtung 18.

Der Testgasspeicher 12 wird von einem gasdichten topfförmigen Speicherbehälter 20 gebildet, der mit seiner nach unten weisenden Öffnung gasdicht in das obere Ende des Sockels 14 eingesetzt ist.

Der Metall-Sockelkörper des Sockels 14 weist einen axial vertikal verlaufenden Auslasskanal 17 auf, der den Testgasauslass 16 bildet. Am speicherbehälterseitigen Ende des Auslasskanals 17 ist ein ringförmiger stufenartiger Absatz 26 in den Sockelkörper 15 eingelassen, in dem auf einem ringförmigen Isolationskörper 28 der Gasdurchlass 1 lagert.

Im axial mittleren Bereich des Auslasskanales 17 ist als mechanischer Schutz eine Filterscheibe 43 mit einem Sicherungsring 44 angeordnet, die das Eindringen von Partikeln in das empfindliche nachfolgende Änalysegerät vermeidet.

Am auslassseitigen Ende des Sockels 14 ist ein Befestigungsflansch 46 vorgesehen, der der einfachen Montierbarkeit der Testleckvorrichtung 10 an ein nachfolgendes Element dient.

Der Isolationskörper 28 besteht aus einem gut wärmeisolierenden hitze- und gasbeständigem Material -und isoliert den Gasdurchlass 1 thermisch gegenüber dem Sockelkörper 15. Hierdurch wird die Wärmeabfuhr in den Sockel 14 auf ein Minimum reduziert, so dass auch die zum Halten einer bestimmten Temperatur erforderliche Heizenergie so gering wie möglich gehalten wird. Zur Realisierung hoher Modulationsfrequenzen kann der Isolationskörper 28 jedoch auch aus gut wärmeleitendem Material bestehen.

Mit der beschriebenen Testleckvorrichtung lassen sich Leckraten von 10⁻¹¹ bis 10⁻⁴ mbar·l·s⁻¹ realisieren.

Die beschriebene Testleckvorrichtung 10 stellt zum einen eine über einen weiten Leckratenbereich genau einstellbare und steuerbare Testgasquelle dar und ist gleichzeitig sehr zuverlässig, da Verstopfungen des Auslasskanales 17 oder des Gasdurchlasses 1 praktisch ausgeschlossen sind.

## Patentansprüche

1. Gasdurchlass (1) mit selektiv wirkenden Gasdurchtrittsflächen (4), umfassend eine mit einer Vielzahl von Durchtrittsöffnungen (2) ausgerüsteten Trägerscheibe (3) aus einem Halbleiterwerkstoff, eine die Öffnungen (2) in der Trägerscheibe (3) abdeckende Membran (5), die die selektiv wirkenden Gasdurchtittsflächen (4) bildet, sowie Mittel zur Temperierung der Membran (5), **dadurch gekennzeichnet, dass** die Trägerscheibe (3) selbst als Mittel zur Temperierung der Membran (5) dient.

2. Gasdurchlass nach Anspruch 1, **dadurch gekennzeichnet, dass** die Trägerscheibe (3) zumindest überwiegend aus Silizium besteht.

3. Gasdurchlass nach Anspruch 1 oder 2, **dadurch gekennzeichnet, dass** die Membran (5) aus Quarz, Quarzglas oder ähnlichen Materialien, z.B. Pyrex-Glas, besteht.

4. Gasdurchlass nach Anspruch 1 oder 2, **dadurch gekennzeichnet, dass** die Membran (5) aus einem Polymer besteht.

5. Gasdurchlass nach Anspruch 1 oder 2, **dadurch gekennzeichnet, dass** die Trägerscheibe (3) in einander im wesentlichen gegenüber liegenden Bereichen mit Elektroden (6, 7) ausgerüstet ist und selbst als Widerstandsheizung dient.

6. Gasdurchlass nach einem der vorhergehenden Ansprüche, **dadurch gekennzeichnet, dass** er Bestandteil eines Helium-Leckgasdetektors (8) ist.

7. Gasdurchlass nach einem der Ansprüche 1 bis 5, **dadurch gekennzeichnet, dass** er Bestandteil eines regelbaren Helium-Testlecks (10) ist.

8. Leckgasdetektor (8), bei dem das Leckgas (vorzugsweise Helium) über den Druckanstieg nachgewiesen wird, **dadurch gekennzeichnet, dass** er mit einem Gasdurchlass (1) nach einem der Ansprüche 1 bis 5 ausgerüstet ist.

9. Regelbares Testleck (10), vorzugsweise für Helium, bei dem die Leckrate mit Hilfe einer selektiv durchlässigen Membran einstellbar ist, **dadurch gekennzeichnet, dass** es mit einem Gasdurchlass (1) nach einem der Ansprüche 1 bis 5 ausgerüstet ist.

## Claims

1. A gas passage (1) with selective gas permeable surfaces (4) comprising a support disc (3) having a plurality of through openings (2), said disc being made from a semiconductor material, a membrane (5) covering the openings (2) in the support disc (3), said membrane forming the selective gas permeable surfaces (4), and means for controlling the temperature of the membrane (5) **characterized in that** the support disc (3) itself serves as a means for controlling the temperature of the membrane (5).

2. The gas passage of claim 1, **characterized in that** the support disc (3) consists at least mostly of silicon.

3. The gas passage of claim 1 or 2, **characterized in that** the membrane (5) consists of quartz, quartz glass or similar materials, such as Pyrex glass, for instance.

4. The gas passage of claim 1 or 2, **characterized in that** the membrane (5) consists of a polymer.

5. The gas passage of claim 1 or 2, **characterized in that** the support disc (3) is provided in areas substantially opposite each other with electrodes (6, 7) and itself serves as a resistance heater.

6. The gas passage of one of the preceding claims, **characterized in that** it is part of a helium leakage gas detector (8).

7. The gas passage of one of claims 1 to 5, **characterized in that** it is part of a controllable helium calibrated leak (10).

8. A leakage gas detector (8), in which the tracer gas (preferably helium) is detected through a pressure rise, **characterized in that** it is equipped with a gas passage (1) of one of claims 1 to 5.

9. A controllable calibrated leak (10), preferably for helium, in which the leakage rate is adjustable with the aid of a selectively permeable membrane, **characterized in that** it is equipped with a gas passage (1) of one of claims 1 to 5.

## Revendications

1. Système de passage de gaz (1) avec des surfaces de passage de gaz (4) agissant de façon sélective, comprenant un disc de support (3) en matière semi-conductrice prévu avec plusieurs ouvertures de passage (2), une membrane (5) couvrant les ouvertures (2) dans le disc de support (3), ladite membrane formant les surface de passage de gaz (4) agissant de façon sélective, et des moyens de températion de ladite membrane (5), **caractérisé en ce que** le disc de support (3) lui-même sert comme moyen de températion de ladite membrane (5).

2. Système de passage de gaz selon la revendication 1, **caractérisé en ce que** le disc de support (3) consiste, au moins pour la plupart, en silicium.

3. Système de passage de gaz selon les revendications 1 ou 2, **caractérisé en ce que** ladite membrane (5) consiste en quartz, verre quartzeux ou des matières similaires, pour exemple verre pyrex.

4. Système de passage de gaz selon les revendications 1 ou 2, **caractérisé en ce que** ladite membrane (5) consiste en un polymère.

5. Système de passage de gaz selon les revendications 1 ou 2, **caractérisé en ce que** le disc de support (3) est muni des électrodes (6, 7) dans des parties sensiblement vis-à-vis et lui-même sert comme résistance chauffante.

6. Système de passage de gaz selon l'une quelconque des revendications précédentes, **caractérisé en ce qu'**il fait partie d'un détecteur de fuite de gaz à l'hélium (8).

7. Système de passage de gaz selon les revendications 1 à 5, **caractérisé en ce qu'**il fait partie d'une fuite étalon réglable à l'hélium (10).

8. Détecteur de fuite de gaz (8), dans lequel le gaz traceur (de préférence l'hélium) est détecté par l'augmentation de pression, **caractérisé en ce qu'**il est muni d'un système de passage de gaz (1) selon l'une quelconque des revendications 1 à 5.

9. Fuite étalon réglable (10), de préférence pour l'hélium, dans laquelle le taux de fuite est réglable à l'aide d'une membrane à perméabilité sélective, **caractérisée en ce qu'**elle est munie d'un système de passage de gaz (1) selon l'une quelconque des revendications 1 à 5.
